Europäisches Patentamt

(19) European Patent Office

Office européen des brevets

(11) Numéro de publication : **0 177 397**

**B1**

(12) **FASCICULE DE BREVET EUROPÉEN**

(45) Date de publication du fascicule du brevet :
28.06.89

(21) Numéro de dépôt : 85401815.7

(22) Date de dépôt : 19.09.85

(51) Int. Cl.⁴ : **F 16 K 1/42**, F 16 K 27/02

(54) **Robinet à soupape à siège démontable et à maintenance rapide.**

(30) Priorité : 26.09.84 FR 8414766

(43) Date de publication de la demande :
09.04.86 Bulletin 86/15

(45) Mention de la délivrance du brevet :
28.06.89 Bulletin 89/26

(84) Etats contractants désignés :
CH DE GB IT LI

(56) Documents cités :
FR–A– 560 268
FR–A– 1 460 099
FR–A– 1 566 997
FR–A– 2 113 717
GB–A– 1 373 818

(73) Titulaire : SCHLUMBERGER INDUSTRIES
50, avenue Jean Jaurès
F-92120 Montrouge (FR)

(72) Inventeur : Lephilibert, Jean
37, rue Collange
F-92300 Levallois Perret (FR)

(74) Mandataire : Dronne, Guy
SCHLUMBERGER INDUSTRIES Groupe Transactions
Electronique 50, avenue Jean Jaurès
F-92120 Montrouge (FR)

EP 0 177 397 B1

**Description**

La présente invention a pour objet un robinet à soupape à siège démontable et à maintenance rapide.

De façon plus précise la présente invention concerne un robinet à soupape utilisable notamment dans des installations nucléaires et dont le démontage, en particulier celui du siège est aisé.

Dans les réacteurs nucléaires du type à eau sous pression, l'énergie produite par la réaction de fission du matériau nucléaire constituant le cœur du réacteur est transmise à un échangeur thermique primaire par une circulation d'eau dite primaire entre la cuve du réacteur et l'échangeur thermique primaire. Bien que le matériau combustible soit enfermé dans une gaine étanche de l'élément combustible, il existe toujours un risque de fissures dans cette gaine qui peuvent entraîner un passage de produits de fission dans l'eau primaire. Il est donc nécessaire que l'ensemble des éléments formant le circuit primaire assure un excellent confinement.

En outre, on sait que dans ce type d'installation nucléaire, l'ensemble du circuit primaire est enfermé dans une enceinte de confinement dans laquelle il règne un certain rayonnement. Les interventions à l'intérieur de cette enceinte de confinement doivent donc être exceptionnelles et leur durée doit être aussi réduite que possible, c'est-à-dire que l'intervention sur chacun des composants du circuit primaire doit être simple. En outre, il est important de connaître à l'avance la durée approximative de l'intervention.

Enfin, compte tenu du rayonnement qui existe à l'intérieur de la cuve primaire du réacteur, et en particulier en raison du rayonnement neutronique, il est extrêmement souhaitable que l'eau primaire ne contienne aucune particule d'un matériau susceptible de donner un produit radioactif. Il est donc nécessaire que dans le circuit primaire aucun des composants ne soit réalisé à l'aide d'un matériau susceptible de donner un produit radioactif sous l'effet du rayonnement. C'est en particulier le cas du cobalt.

Pour ces applications, les réalisations actuelles de robinets à soupape à presse garnitures comportent généralement une enceinte en acier inoxydable matricé, composée d'un corps et d'un chapeau-arcade vissés et soudés, la soudure assurant l'étanchéité externe statique.

Dans les réalisations actuelles, en général le siège est déposé métallurgiquement dans le corps, il n'est pas possible de modifier la forme et la nature de la portée d'étanchéité — l'appareil étant soudé sur sa tuyauterie — pour mieux l'adapter par exemple aux conditions d'exploitation locales.

Il faut observer de plus, que, dans les réalisations actuelles, le rodage du siège d'un robinet, en place sur son circuit, exige des opérations préalables longues et délicates pour la dépose de la tête. Le meulage de la soudure des lèvres d'étanchéité et le dévissage du chapeau-arcade exigent des outillages spécifiques parfaitement adaptés. Enfin, les interventions de ce type sont généralement limitées à 3, en raison de la petitesse des lèvres.

De plus, il faut noter que la réfection des presse-garnitures est généralement longue et malaisée, qu'elle exige un outillage d'extraction et que les bagues d'étanchéité utilisées en rechange doivent être nécessairement coupées, ce qui réduit considérablement leur efficacité.

Si l'on considère les critères auxquels doivent satisfaire les robinets montés sur les différentes parties du circuit primaire d'un tel réacteur nucléaire, on peut en dégager trois principaux. Il est nécessaire que le changement du siège du robinet ou de ses garnitures d'étanchéité puisse être réalisé rapidement et à l'aide d'opérations simples. Il est nécessaire que le robinet ne constitue pas un point faible dans le maintien du confinement du circuit primaire, en d'autres termes, il faut que le robinet présente une excellente étanchéité, en particulier vis-à-vis de l'extérieur. Enfin, il est nécessaire d'éviter d'utiliser dans l'ensemble du robinet des matériaux susceptibles de produire des produits radioactifs sous l'effet du rayonnement.

Le brevet français 560, 268 décrit certes un robinet à cage à siège amovible. Mais la structure de ce robinet ne permet ni un changement rapide du siège ni une extraction aisée des garnitures d'étanchéité.

Au vu de ces exigences, un objet principal de l'invention est de fournir un robinet à soupape dans lequel l'extraction du siège et des garnitures d'étanchéité soit aisée tout en assurant une très bonne étanchéité et dans lequel de plus on évite l'utilisation notamment de cobalt.

Pour atteindre ce but le robinet à soupape objet de l'invention comprend une tige de commande mobile en translation selon l'axe du robinet, des moyens de manœuvre pour commander le mouvement de translation de la tige, un clapet solidaire d'une extrémité de la tige, un corps réalisé en une seule pièce et percé de passages d'entrée et de sortie du liquide qui débouchent dans une cavité prolongée par un orifice cylindrique percé dans le corps et disposé selon l'axe dudit robinet pour le passage de ladite tige, une cage logée dans ladite cavité et dans laquelle peut se déplacer ledit clapet sous l'action de ladite tige, ladite cage étant formée par un fond percé d'un orifice pour le passage de ladite tige et une paroi latérale percée d'orifices pour le passage du liquide dans laquelle peut coulisser ledit clapet, ladite paroi latérale comportant un bord libre opposé audit fond, un siège pour coopérer avec ledit clapet en position de fermeture ledit siège étant formé par une pièce annulaire distincte dudit corps, ledit siège présentant une première face définissant une portée d'étanchéité pour coopérer avec ledit clapet et une première portée d'appui annulaire sur laquelle repose le bord libre de la cage et une deuxième face définissant une deuxième portée d'appui annulaire des moyens pour définir une troisième portée annulaire de révolution autour dudit axe disposée dans ladite cavité entre les débouchés desdits passages au moins sensiblement fixes par rapport audit corps pour recevoir la deuxième portée annulaire d'appui dudit siège par l'intermédiaire de moyens d'étanchéité, des éléments de garniture entourant une portion de ladite tige, et des moyens de compression, et il se caractérise en ce que lesdits éléments de garniture sont disposés dans ledit orifice cylindrique et reposent sur la face externe du fond de la cage, et en ce que lesdits moyens de compression agissent sur un empilement ayant même axe que ledit corps de robinet et comprenant lesdits éléments de garniture, ladite cage, ledit siège et lesdits moyens d'étanchéité, par quoi lesdites garnitures et lesdits moyens d'étanchéité sont soumis à ladite compression pour réaliser une étanchéité entre respectivement ladite tige et la paroi dudit orifice cylindrique du corps, et ledit siège et ledit corps.

On comprend qu'ainsi la tête et le siège du robinet peuvent être aisément extraits du corps du robinet sans outillage particulier, ce qui permet de réusiner ou de changer ces pièces en atelier et non sur le site.

D'autres caractéristiques et avantages de l'invention apparaîtront plus clairement à la lecture de la description qui suit de plusieurs modes de réalisation de l'invention donnés à titre d'exemples non limitatifs. La description se réfère au dessin annexé sur lequel :

la figure 1 est une vue en coupe verticale d'un robinet à soupape à cage simple et à siège démontable ;

la figure 2 est une vue partielle en coupe verticale d'une première variante de réalisation d'un robinet à siège démontable ;

la figure 3 est une vue partielle en coupe verticale d'une variante de réalisation du robinet, montrant plus particulièrement un mode de réalisation de l'étanchéité entre le corps et le siège du robinet, et

la figure 4 est une vue partielle en coupe verticale d'un robinet selon l'invention ayant une double cage, et

la figure 5 est une vue en coupe verticale d'un cinquième mode de réalisation du robinet selon l'invention.

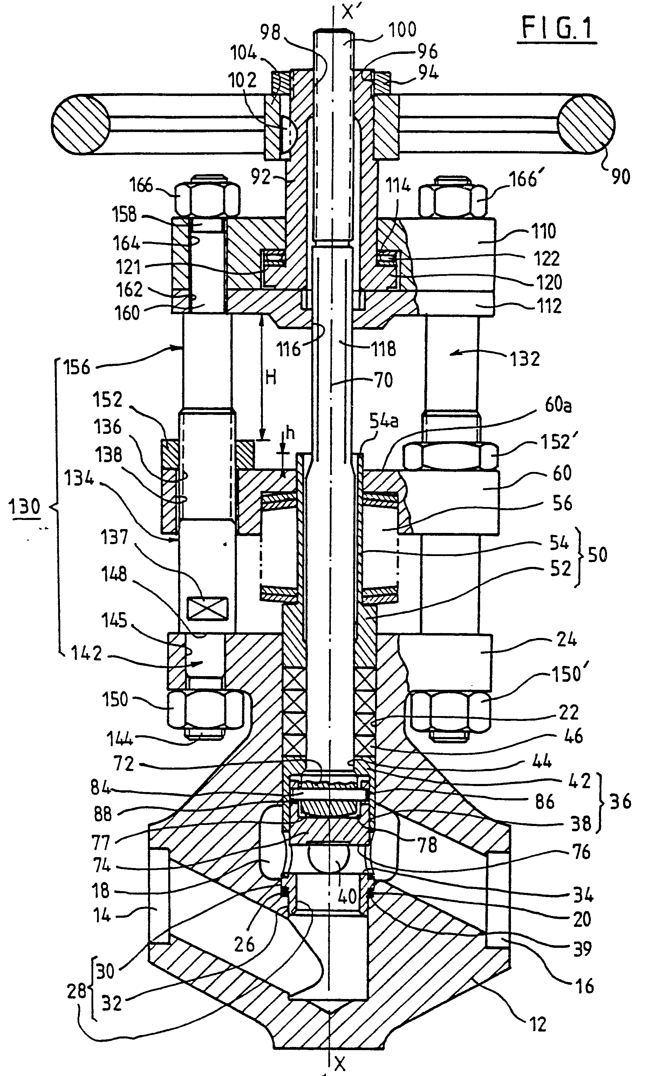

La figure 1 représente un premier mode de réalisation du robinet à soupape selon l'invention, ce robinet comportant une cage simple. Le robinet comprend un corps 12 muni d'un passage d'entrée 14 et d'un passage de sortie 16 réunis entre eux par une cavité 18 disposée selon l'axe XX' du robinet. Entre les passages 14 et 16 la cavité 18 présente un épaulement 20 de préférence de forme tronconique et d'axe XX'. La cavité 18 se prolonge au-delà du passage de sortie 16 par un perçage cylindrique 22 d'axe XX'. A sa partie supérieure entourant le perçage 22, le corps du robinet 12 comporte une bride de fixation 24. A l'intérieur de la cavité 18, le robinet comprend un joint annulaire 26, de préférence en graphite, qui comporte une face inférieure tronconique reposant sur l'épaulement 20 formant portée d'appui et une face supérieure plane. Le joint 26 sert à réaliser l'étanchéité entre le corps 12 du robinet et un siège amovible 28 constitué par un manchon 30 muni d'une collerette externe 32. La face inférieure de la collerette 32 forme une portée annulaire d'appui par laquelle le siège repose sur la face supérieure du joint 26. La face supérieure annulaire du manchon 30, référencée 34, constitue la portée d'étanchéité du siège. Le siège 28 est maintenu en place par une cage 36 logée dans la cavité 18 et centrée par le perçage 22. La cage 36 comporte une paroi latérale cylindrique en forme de manchon 38 percée d'orifices tels que 40 qui permettent une communication entre la cavité 18 et le passage de sortie 16 lorsque le robinet est en position ouverte. La cage 36 comporte à sa partie supérieure un fond 42 percé d'un orifice 44 dont le diamètre est inférieur au diamètre interne du manchon 38 de la cage 36 et qui assure le centrage de la tige 70.

La face inférieure 39 du manchon 38 repose sur la face supérieure de la collerette 32 qui forme ainsi une portée d'appui annulaire d'axe XX'.

Au-dessus de la cage 36 le robinet comporte un empilement de garnitures d'étanchéité annulaires non fendues en forme de bagues telles que 46 qui sont logées dans le perçage 22 et appliquées sur la face supérieure 48 de la cage 36. Ces garnitures d'étanchéité sont réalisées de préférence en graphite expansé et matricé. Au-dessus des garnitures d'étanchéité 46 et partiellement engagé dans le perçage 22, on trouve un fouloir 50 ou presse-garniture comportant une partie inférieure 52 présentant un diamètre externe plus important que celui de la partie supérieure 54 du fouloir 50. La partie supérieure 54 du fouloir assure le centrage pour l'empilage des rondelles élastiques telles que 56. L'empilement constitué par le joint d'étanchéité 26, le siège 28, la cage 36 les garnitures d'étanchéité 46, le fouloir 50 et les rondelles élastiques 56, est plaqué contre l'épaulement 20 par une bride de fouloir 60 munie d'un alésage axial 62 centré sur la partie supérieure 54 du fouloir 50. Par des moyens qui seront décrits ultérieurement, la bride de fouloir 60 est rendue solidaire de la bride 24 du corps de robinet pour comprimer les rondelles élastiques 56 avec une force donnée.

A l'intérieur du passage axial formé par les alésages axiaux du fouloir 50 et des garnitures d'étanchéité 46 et par l'orifice 44 de la cage, coulisse une tige de commande 70 qui présente une extrémité inférieure 72 ayant un diamètre qui est supérieur à celui de la tige 70. Le diamètre externe de l'extrémité 72 de la tige est en outre supérieur au diamètre de l'alésage 44. L'extrémité inférieure 72 de la tige est solidaire d'un clapet 74. La face inférieure du clapet 74 comporte une portée annulaire rodée 76 qui coopère avec la portée d'étanchéité 34 du siège 28 lorsque le robinet est en position fermée. A sa partie supérieure le clapet 74 comporte un évidement 78 dans lequel pénètre l'extrémité 72 de la tige. La face inférieure 80 de l'extrémité 72 de la tige a la forme d'une calotte sphérique 77 et coopère avec le fond plat de l'évidement 78 du clapet. La solidarisation de la tige 70 avec le clapet est réalisée par un axe transversal 84 traversant l'extrémité 72 de la tige et pénétrant dans deux alésages alignés 86 et 88 ménagés dans la jupe du clapet 74. L'axe 84 est orthogonal à l'axe XX' du robinet. En outre, le diamètre des alésages 86 et 88 est légèrement supérieur au diamètre de l'axe 84.

En raison du jeu de montage entre l'axe 84 et le clapet 74, l'extrémité de la tige 72 en forme de calotte sphérique vient au contact du fond plat de l'évidement 78 du clapet. Cela permet de rattraper un éventuel défaut de parallélisme entre la portée 76 du clapet et la portée d'étanchéité 34 du siège 28.

La manœuvre de la tige 70 est réalisée à l'aide d'un ensemble constitué par un volant 90 solidaire en rotation et en translation d'une douille 92. La solidarisation est réalisée par un écrou 94 vissé sur l'extrémité supérieure filetée 96 de la douille 92. L'extrémité supérieure de la douille comporte un orifice axial taraudé 98 qui coopère avec une extrémité filetée 100 de la tige 70. La solidarisation en rotation de la douille 92 avec le volant 90 est assurée par une clavette 102 engagée dans une rainure radiale de la douille 92 et une rainure du moyeu 104 du volant. L'immobilisation en translation de la douille 92 est assurée par un ensemble constitué par une bride supérieure 110 et une bride inférieure 112. La bride supérieure 110 comporte un alésage axial muni d'un épaulement 114. La bride inférieure 112 est munie d'un alésage axial 116 de section droite carrée ou dentée qui coopère avec une portion médiane 118 de la tige 70 ayant également une section droite dentée ou carrée. Cette disposition interdit toute rotation de la tige 70. La douille 92 comporte à son extrémité inférieure une collerette 120 emprisonnée dans un évidement 121 formé par les brides 110 et 112. Des roulements tels que 122 sont interposés entre la face supérieure de la collerette 120 et la bride supérieure 110.

Il faut remarquer que la tige 70 est guidée en translation par l'orifice 116 de la bride inférieure 112 et par l'orifice 44 du fond de la cage 36.

En se référant toujours à la figure 1, on va décrire un premier mode de solidarisation de la bride 24 du corps de robinet 12 avec la bride de fouloir 60 et avec les deux brides 110 et 112 dans lesquelles est montée la douille 92. Cette solidarisation est réalisée par deux tirants 130 et 132 munis de plats de serrage référencés 137. Les deux tirants étant identiques, on décrira seulement en détail le tirant 130. Il comprend une partie centrale 134 partiellement filetée en 136 et qui est engagée dans un des deux trous 138 et 140 ménagés dans la bride de fouloir 60. Le tirant 130 comprend une partie inférieure 142, dont l'extrémité 144 est filetée. La partie inférieure 142 a un diamètre inférieur à celui de la partie centrale 134. La partie inférieure 142 est engagée et centrée dans un des deux trous 145 percés dans la bride 24 du corps 12 de robinet. La différence de diamètre entre les parties centrale 134 et inférieure 142 du tirant 130 définit un épaulement 148 qui est en appui sur la face supérieure 24a de la bride 24. L'extrémité filetée 144 du tirant dépasse du trou 145 et elle coopère avec un écrou 150. Ainsi l'extrémité inférieure des tirants 130 et 132 est solidaire de la bride 24. Les tirants 130 et 132 sont parallèles à la tige de commande 70.

La portion filetée 136 de la partie centrale 134 du tirant 130 est située partiellement au-dessus de la bride de fouloir 60. Un écrou 152 vissé sur la partie filetée 136 est en appui sur la face supérieure 60a de la bride du fouloir 60.

Enfin, le tirant 130 comprend une partie supérieure 156 ayant une extrémité filetée 158. La partie supérieure 156 a un diamètre inférieur à celui de la partie centrale 134. Cette différence de diamètre définit à nouveau un épaulement 160. La partie supérieure 156 traverse des trous 162 et 164 ménagés dans les brides inférieure 112 et supérieure 110 dans lesquelles est montée la douille 92. La bride inférieure 110 repose sur l'épaulement 160 et un écrou 166 vissé sur l'extrémité filetée 158 du tirant solidarise les brides 110 et 112 entre elles ainsi que l'ensemble formé par ces deux brides avec l'extrémité supérieure du tirant 130.

De la même manière, l'extrémité inférieure du tirant 132 est rendue solidaire de la bride 24 par l'écrou 150' et l'extrémité supérieure du tirant 132 est rendue solidaire de l'ensemble formé par les brides 110 et 112 à l'aide d'un écrou 166'. En outre, un écrou 152', correspondant à l'écrou 152, est vissé sur la partie centrale filetée du tirant 132 et vient en appui sur la face supérieure 60a de la bride de fouloir 60.

On comprend qu'en vissant plus ou moins les écrous 152 et 152' on peut comprimer plus ou moins les rondelles élastiques 56 et obtenir ainsi un effort spécifié sur les garnitures 46 qui assurent l'étanchéité externe et sur le joint statique 26 qui assure l'étanchéité interne entre le corps 12 et le siège 28, la compression des rondelles pouvant être repérée par la distance h entre l'extrémité supérieure 54a du presse-garniture 52 et la face supérieure 60a de la bride de fouloir 60.

Il faut souligner que pour accroître la pression d'assise sur le joint 26, qui est transmise par l'intermédiaire des garnitures 46, on donne à la surface de celles-ci, perpendiculairement à l'axe XX', une valeur sensiblement supérieure à la surface correspondante du joint 26. Par exemple pour un robinet présentant un diamètre de siège de 25 mm, le rapport des surfaces est de 2,5. De plus, le système élastique formé par les rondelles 56 a pour but de compenser l'extrusion éventuelle des bagues 46 de graphite le long de la tige 70.

Le fonctionnement du robinet à soupape découle clairement de la description précédente. Dans la position d'ouverture, représentée sur la figure 1, le clapet 74 est en position haute. Le liquide pénètre dans la cavité 18 par le passage

d'entrée 14 et il s'écoule dans le passage de sortie 16 à travers les orifices 40 ménagés dans la cage 36. Pour interrompre la circulation du liquide on tourne le volant 90 dans le sens horaire ce qui provoque la rotation de la douille 92, cette dernière entraînant l'abaissement de la tige 70 et donc du clapet 74. On agit sur le volant 90 jusqu'à ce que la portée annulaire 76 du clapet arrive au contact de la portée 34 du siège 28 avec la pression requise. On notera que cette pression de fermeture accroît la pression exercée sur le joint 26 et améliore encore l'étanchéité.

Pour extraire la tête du robinet et remplacer les garnitures 46, par exemple, on procède de la manière suivante : on dévisse complètement les écrous 152 et 152', ce qui désolidarise en translation la bride de fouloir 60 par rapport aux tirants 130 et 132, puis on manœuvre le volant 90 dans le sens anti-horaire ce qui fait remonter la tige 70. Celle-ci remonte librement jusqu'à ce que son épaulement 72 vienne en butée sur le fond 42 de la cage 36. A partir de cette position, le soulèvement de la tige 70 entraîne celui de la cage 36, des garnitures 46, du fouloir 50, des rondelles élastiques 56 et enfin de la bride de fouloir 60. Le soulèvement de tout cet ensemble à l'aide du volant 90 n'est possible que parce que les écrous 152 et 152' sont entièrement dévissés. Le mouvement de soulèvement cesse lorsque les écrous 152 et 152' arrivent en butée sur la bride 112. Pour que, dans cette position, toutes les garnitures 46 soient extraites de leur logement, il suffit de prévoir une distance H convenable entre les écrous 152 et 152' en position de fonctionnement et la bride 112.

Le dévissage des écrous 166 et 166' permet alors la dépose complète de la tête du robinet, puis du siège 28 et du joint 26. Cette opération ne nécessite aucun outillage spécial puisqu'il n'y a plus aucun effort de frottement entre les garnitures 46 et leur logement.

Le robinet représenté sur la figure 1 présente une fuite au portage inférieure à 0,1 cm³/h sous la pression de service et le coefficient K de perte de charge à pleine ouverture est inférieur à 6.

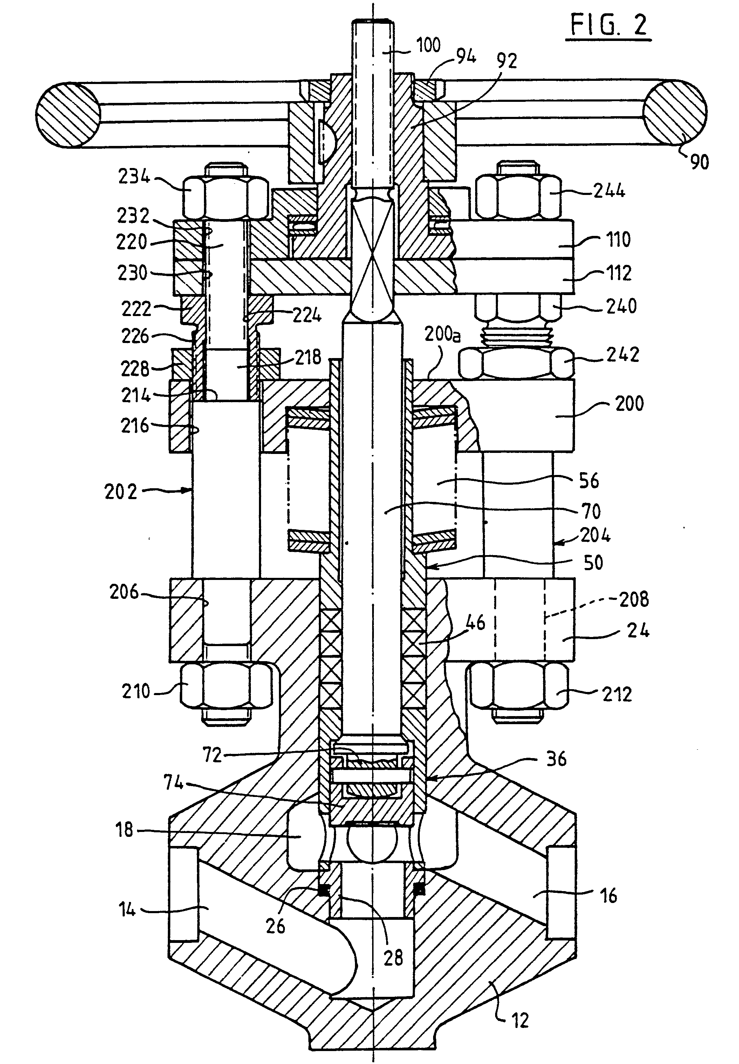

En se référant maintenant à la figure 2 on va décrire une première variante de réalisation du robinet. Cette variante ne diffère du premier mode de réalisation que par le mode de fixation de la bride de fouloir sur le corps de robinet. C'est donc la seule partie du robinet selon la première variante que l'on va décrire en détail. La bride de fouloir, qui est référencée 200 sur la figure 2, est montée à l'aide de deux tirants 202 et 204 qui sont identiques. L'extrémité inférieure de chaque tirant est engagée dans un trou 206, 208, ménagé dans la bride 24 du corps de robinet. Les extrémités inférieures des tirants sont solidarisées avec la bride 24 grâce à des écrous 210 et 212 et les tirants sont maintenus parallèles à la tige de commande 70, d'une manière similaire à la fixation des extrémités inférieures des tirants 130 et 132 de la figure 1.

Comme le montre la figure 2 le tirant 202 présente un épaulembt 214 situé à l'intérieur d'un trou 216 ménagé dans la bride de fouloir 200. Au-dessus de l'épaulement 214 le tirant 202 comporte une portion non filetée 218 et une extrémité filetée 220. Un écrou long 222 comporte un taraudage 224 et un filetage externe 226. L'écrou 222 est vissé sur l'extrémité filetée 220 du tirant jusqu'à ce que son extrémité inférieure arrive en butée sur l'épaulement 214. Un deuxième écrou 228 est vissé sur le filetage externe de l'écrou long 222. L'écrou 228 est en contact avec la face supérieure 200a de la bride de fouloir 200. Il sert à régler l'effort appliqué par la bride de fouloir 200 sur les rondelles élastiques 56, comme cela a déjà été expliqué en liaison avec la figure 1.

L'extrémité supérieure filetée 220 du tirant 202 traverse des trous 230 et 232 ménagés dans les brides 112 et 110 dans lesquelles est engagée la douille 92 solidaire du volant 90. La bride 112 est en appui sur l'extrémité supérieure de l'écrou long 222. Un écrou 234 vissé sur l'extrémité filetée 220 du tirant assure la solidarisation des brides 110 et 112 à l'extrémité supérieure du tirant 202. On retrouve le même montage pour le tirant 204 qui est associé à un écrou long 240 sur lequel est vissé un écrou 242. Enfin, un écrou 244 est vissé à l'extrémité supérieure du tirant 204.

Selon ce mode de réalisation l'extraction de la tête de robinet se fait en plaçant la tige 70 en butée haute par rotation anti-horaire du volant, puis en enlevant les écrous 234 et 244 et enfin en dévissant les écrous longs 222 et 240 qui servent d'extracteur.

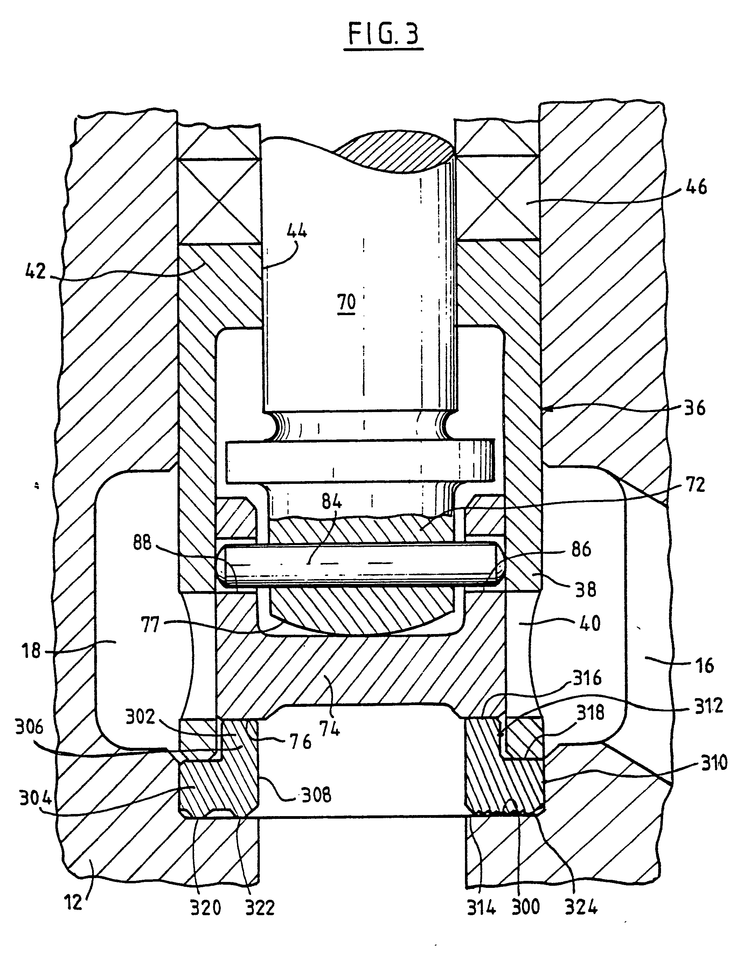

Sur la figure 3 on a représenté partiellement une deuxième variante de réalisation du robinet selon l'invention. Selon cette variante, le siège amovible du clapet repose directement sur le corps du robinet. En liaison avec la figure 3 on décrira seulement les modifications apportées au mode de réalisation de la figure 1, les parties communes à ces deux figures portant les mêmes références.

La cavité 18, faisant communiquer les passages d'entrée 14 et de sortie 16, est munie d'un épaulement 300 disposé dans un plan perpendiculaire à l'axe XX' du robinet et qui forme une portée d'appui annulaire. Sur l'épaulement 300 vient directement reposer un siège amovible 302 qui est de révolution autour de l'axe XX'.

Le siège 302 comprend une partie inférieure 304 plus large et une partie supérieure 306 plus étroite. Les parties 304 et 306 du siège sont limitées intérieurement par une face cylindrique 308 d'axe XX'. La partie inférieure 304 est limitée extérieurement par une surface cylindrique ayant un rayon tel que la partie 304 soit ajustée sur la paroi latérale de la cavité 18 avec un ajustement H9 g6.

La partie supérieure 306 du siège 302 est limitée extérieurement par une surface cylindrique 312 de rayon inférieur à celui de la surface 310. Cette différence de rayon définit une portée d'appui annulaire 312, disposée dans un plan perpendiculaire à l'axe XX'. La partie inférieure 304 du siège 302 est limitée inférieurement par une face 314 et la partie supérieure 306 est limitée par une face 316, les faces 314 et 316 étant perpendiculaires à l'axe XX'. La face supérieure 316 constitue la portée d'étanchéité du siège 302, sur laquelle est appliquée la zone annulaire 76 du clapet 74 lorsque le robinet est en position fermée. La face inférieure 314 sert à réaliser l'étanchéité entre le siège 302 et le corps 12 du robinet.

La face 314 est munie de reliefs qui, en coopérant avec l'épaulement 300 assurent l'étanchéité requise. Pour cela l'extrémité inférieure du manchon 38 de la cage 36 est appliquée sur l'épaulement 318. Comme on l'a déjà décrit en liaison avec la figure 1, les rondelles élastiques 56 exercent un certain effort vers le bas sur la cage 36 par l'intermédiaire du fouloir 50 et des garnitures 46. Ces éléments ne sont pas visibles sur la figure 3.

Si l'on revient à la face inférieure 314 du siège 302 on voit que les reliefs assurant l'étanchéité peuvent consister en deux lèvres annulaires 320 et 322 ayant des bords à 120° (partie de gauche de la figure 3). Les arêtes des lèvres 320 et 322 sont à l'aplomb des zones médianes respectivement de l'épaulement 312 et de la face supérieure 316 du siège 302. Selon un autre mode de réalisation (partie de droite de la figure 3) les reliefs consistent en des stries annulaires 324 s'étendant sensiblement sur toute la face inférieure 314 du siège 302. Lorsque le robinet est en position ouverte, le siège 302 est maintenu en place par la cage 36. Lorsque le robinet est en position fermée, à l'action de la cage 36, s'ajoute celle du clapet 74, ce qui permet d'obtenir une bonne étanchéité malgré l'absence de joint d'étanchéité.

Le mode de montage du siège 302 pourrait aussi bien être utilisé dans un robinet selon la variante représentée sur la figure 2.

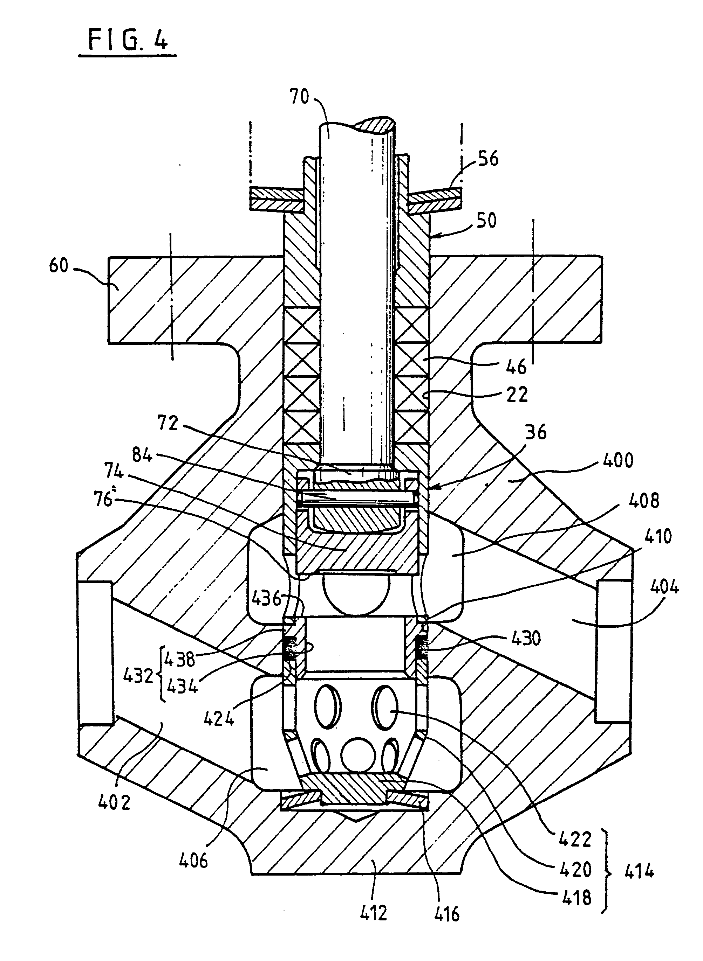

La figure 4 montre une autre variante de réalisation du robinet selon l'invention. Selon cette variante, le robinet est à double cage. Sur la figure 4 on n'a pas représenté la partie supérieure du robinet qui est identique à celle des figures 1 ou 2. Sur cette figure on a représenté les rondelles élastiques 56, le fouloir 50, les garnitures d'étanchéité 46 et la cage 36 qui maintenant est la cage supérieure. On y a également représenté la tige de commande 70 et le clapet 74 fixé à l'extrémité inférieure 72 de celle-ci. Tous ces organes sont identiques aux organes correspondants des figures 1 et 2.

Le robinet comprend de plus un corps 400 en une seule pièce dans lequel est percé un passage 402 d'entrée du liquide et un passage 404 de sortie du liquide. Le passage 402 débouche dans une cavité inférieure 406, et le passage 404 dans une cavité supérieure 408 où est logée la cage supérieure 36. Les cavités supérieure 408 et inférieure 406 communiquent entre elles par un passage cylindrique 410 d'axe XX'. La cavité inférieure 406 comporte un fond 412 sur lequel repose une cage inférieure 414 par l'intermédiaire d'une rondelle élastique 416. La cage inférieure 414 comprend un fond 418 sur lequel est montée la rondelle élastique 416 et une paroi latérale 420 de révolution autour de l'axe XX' du robinet. La paroi latérale 420 de la cage inférieure est munie d'orifices 420 et comporte un bord supérieur 424. La cage inférieure 414 est essentiellement logée dans la cavité inférieure 406 mais son bord supérieur 424 est situé dans le passage 410 faisant communiquer les cavités 408 et 406. Un joint d'étanchéité 430 repose sur le bord supérieur 424 de la cage inférieure 414. Le joint 430 est de préférence réalisé en graphite et son diamètre extérieur est sensiblement égal au diamètre interne du passage 410.

Le robinet comprend également un siège 432 qui a la même forme que le siège 28 de la figure 1. Il comprend un manchon cylindrique 434 dont la face supérieure 436 forme le siège proprement dit et une collerette externe 438. Le siège 432 est conformé de telle manière que la face externe du manchon 434 ait un diamètre légèrement inférieur au diamètre interne du joint 430.

Comme le montre la figure 4, la face inférieure de la collerette 438 du siège 432 repose sur la face supérieure du joint 430, alors que le bord inférieur de la cage supérieure 36 repose sur la face supérieure de la collerette 438.

On voit que le bord supérieur 424 de la cage inférieure 414 forme une portée d'appui annulaire et joue exactement le même rôle que l'épaulement 20 de la figure 1 ou que l'épaulement 300 de la figure 3. La seule différence fonctionnelle réside dans le fait que cette portée d'appui n'est pas rigoureusement fixe par rapport au corps du robinet en raison de la présence de la rondelle élastique 416.

La compression des rondelles élastiques 56 sous l'effet de la bride de fouloir est transmise à la cage supérieure 36 et au siège 432. Il en résulte un écrasement du joint 430. Le joint 430 déformé, est appliqué contre la face interne du passage 410 et contre la face externe du manchon 434 du siège 432, ce qui assure l'étanchéité.

Ce mode de réalisation permet une double reprise élastique des éventuels jeux axiaux, d'une part par la rondelle 416, d'autre part, par l'empilement des rondelles élastiques 56.

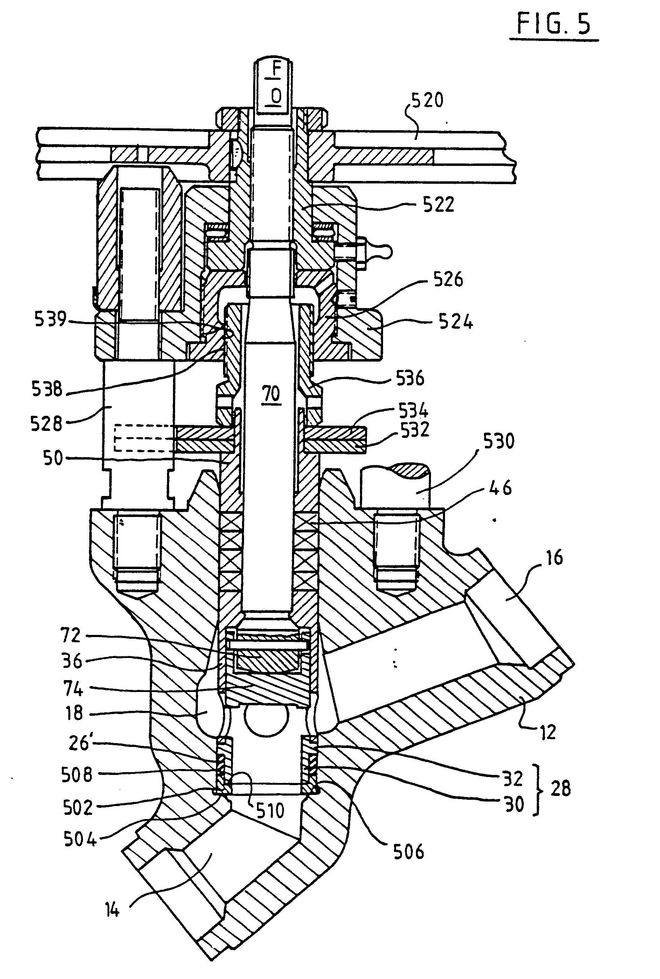

La figure 5 montre un cinquième mode de réalisation du robinet à soupape selon l'invention. Dans la description qui suit on a repris les références de la figure 1 pour repérer les parties du robinet communes aux modes de réalisation des figures 1 et 5.

Le corps 12 du robinet définit une conduite d'entrée 14, une conduite de sortie 16 et une chambre 18. A l'intérieur de la chambre 18, le robinet comprend un siège amovible 28 formé par un manchon cylindrique 30 et une collerette externe 32. Une cage 36 prend appui sur la collerette 32 et elle est surmontée par des bagues d'étanchéité 46 et un fouloir 50. A l'intérieur de la cage 36 peut se déplacer un clapet 74 fixé à l'extrémité inférieure d'une tige de commande 70.

Selon ce mode de réalisation un joint d'étanchéité 26' est disposé sous la face inférieure de la collerette 32 du siège 28. Le joint 26' est de préférence du type en argent à coupelles anti-extrusion. Une bague annulaire 502 comporte une face inférieure 504 reposant sur une portée annulaire 506 du corps 12 du robinet ménagée au fond de la chambre 28. La face supérieure de la bague 502 définit une portée supérieure externe 508 et une portée inférieure interne 510. L'extrémité inférieure du manchon 30 du siège 28 vient en contact avec la portée inférieure 510 de la bague 502, la portée inférieure 510 forme ainsi une quatrième portée d'appui apte à coopérer avec l'extrémité inférieure du siège du robinet. Ainsi, lors du serrage de l'empilement formé par le siège 28, la cage 36, les bagues d'étanchéité 46 et le fouloir 50, le siège 28 vient en butée sur la bague 502. Il en résulte que l'écrasement du joint 26', qui est disposé entre la collerette 32 et la portée supérieure externe 508 de la bague 502, est défini avec une grande précision.

Si l'on considère la partie supérieure de la figure 5, on voit que la tige de commande 70 est actionnée par un ensemble formé par un robinet 520 solidaire d'une douille filetée 522. La douille 522 est montée libre en rotation dans un ensemble constitué essentiellement par les pièces 524 et 526 vissées entre elles. L'ensemble des pièces 524 et 526 est rendu solidaire du corps 12 du robinet par des tirants tels que 528 et 530.

Le fouloir 50 est surmonté par des éléments élastiques 532 et 534, sur lesquels agit un écrou de serrage 536. La partie supérieure 538 de l'écrou 536 est filetée pour coopérer avec une partie taraudée 539 de la pièce 526. L'écrou 536 agit sur l'empilement des pièces allant des éléments élastiques 532, 534 au siège 28. L'action de l'écrou permet d'amener l'extrémité inférieure du siège 28 en butée sur la bague 502, et d'obtenir la compression des bagues d'étanchéité 46.

Il faut ajouter que le diamètre externe de l'extrémité 72 de la tige de commande 70 est supérieur à celui de l'alésage 44 ménagé dans la cage 36.

Ainsi, à chaque fois que la tige 70 est amenée en position haute extrême à l'aide du volant 520, la cage 36 est « imperceptiblement » soulevée ce qui assure un serrage supplémentaire des éléments de garniture 46 les plus proches de la cage 36, c'est-à-dire ceux qui sont en contact avec le fluide. L'étanchéité est encore améliorée.

Il découle de la description précédente de cinq modes préférés de réalisation du robinet selon l'invention que sa maintenance est sensiblement simplifiée.

Dans tous les cas le siège est amovible. Il est donc possible de l'extraire du corps du robinet et de procéder à son inspection et à son entretien en usine, et plus nécessairement sur le site.

Le remplacement du siège permet en particulier l'utilisation de nouveaux portages d'étanchéité caractérisés par de nouveaux couples de matériaux ou de nouvelles formes (cône-sphère, cône-cône, ou parties planes circulaires).

Le démontage aisé et rapide de la tête et du siège du robinet ne nécessite pas d'outillage spécial. L'interchangeabilité des têtes et des sièges permet le remplacement des pièces usagées par des pièces préparées en atelier et non sur le site.

Au contraire, dans les robinets connus du même type, le chapeau est directement vissé sur le corps du robinet. Cette solution interdit l'utilisation de joints statiques et l'étanchéité entre le corps et le chapeau du robinet est réalisée par soudage entre elles de lèvres solidaires respectivement du chapeau et du corps. Le démontage du robinet nécessite donc, sur le site, des opérations délicates et longues de meulage et de soudage.

Enfin, il n'y a aucun dépôt dur de cobalt ou d'un autre corps sur les parois internes du robinet, ce qui supprime tout risque d'entraînement par le liquide de particules susceptibles d'être activées lorsque le robinet est monté dans le circuit primaire d'un réacteur nucléaire.

Ce type de dépôt, en raison de la liaison métallurgique avec le métal du corps du robinet, a une tenue aléatoire aux chocs thermiques.

## Revendications

1. Robinet à soupape comprenant une tige de commande (70) mobile en translation selon l'axe du robinet, des moyens de manœuvre pour commander le mouvement de translation de ladite tige, un clapet (74) solidaire d'une extrémité de ladite tige, un corps réalisé en une seule pièce et percé de passages d'entrée et de sortie du liquide qui débouchent dans une cavité prolongée par un orifice cylindrique percé dans le corps et disposé selon l'axe dudit robinet pour le passage de ladite tige, une cage (36) logée dans ladite cavité et dans laquelle peut se déplacer ledit clapet sous l'action de ladite tige, ladite cage étant formée par un fond (42) percé d'un orifice (44) pour le passage de ladite tige et une paroi latérale (38) percée d'orifices (40) pour le passage du liquide dans laquelle peut coulisser ledit clapet, ladite paroi latérale comportant un bord libre (48) opposé audit fond, un siège pour coopérer avec ledit clapet en position de fermeture ledit siège étant formé par une pièce annulaire distincte dudit corps, ledit siège (28, 302, 432) présentant une première face définissant une portée d'étanchéité (34, 316, 436) pour coopérer avec ledit clapet (74) et une première portée d'appui annulaire (32, 318, 438) sur laquelle repose le bord libre de la cage et une deuxième face définissant une deuxième portée d'appui annulaire (32, 314, 438), des moyens pour définir une troisième portée annulaire (20, 300, 424) de révolution autour dudit axe disposée dans ladite cavité entre les débouchés desdits passages et au moins sensiblement fixes par rapport audit corps pour recevoir la deuxième portée annulaire d'appui (32, 314, 438) dudit siège par l'intermédiaire de moyens d'étanchéité (26, 320, 322, 324, 430), des éléments de garniture (46) entourant une portion de ladite tige, et des moyens de compression (56, 60), caractérisé en ce que lesdits éléments de garniture (46) sont disposés dans ledit orifice cylindrique (22) et reposent sur la face externe du fond (42) de la cage (36), et en ce que lesdits moyens de compression (56, 60) agissent sur un empilement ayant même axe que ledit corps de robinet et comprenant lesdits éléments de garniture (46), ladite cage (36), ledit siège (28, 302, 434) et lesdits moyens d'étanchéité (26, 320, 322, 324, 430), par quoi lesdites garnitures et lesdits moyens d'étanchéité sont soumis à ladite compression pour réaliser une étanchéité entre respectivement ladite tige (70) et la paroi dudit orifice cylindrique (22) du corps, et ledit siège et ledit corps.

2. Robinet à soupape selon la revendication 1, caractérisé en ce que ladite cage (36) ledit siège (28, 302, 434), et lesdits moyens d'étanchéité (26, 320, 322, 324, 430) ont des dimensions, dans des plans de coupe perpendiculaires à l'axe dudit robinet, inférieures au diamètre dudit orifice (22) prolongeant ladite cavité (18) ménagée dans le corps du robinet.

3. Robinet à soupape selon la revendication 2, caractérisé en ce que lesdits moyens pour former ladite troisième portée annulaire d'appui consistent en un épaulement (20) dudit corps à l'intérieur de ladite cavité (18) et en ce que lesdits moyens d'étanchéité comprennent un joint d'étanchéité (26) interposé entre lesdites deuxième (32) et troisième (20) portées annulaires d'appui.

4. Robinet à soupape selon la revendication 3, caractérisé en ce que lesdits moyens de compression comprennent une plaque (60) munie d'un orifice pour le passage de ladite tige (70), des moyens de solidarisation de ladite plaque audit corps, un empilement de rondelles élastiques (56) entourant ladite tige, et un presse garniture (50) entourant ladite tige, lesdites rondelles élastiques (56) étant interposées entre ladite plaque (60) et ledit presse garniture (50), et ledit presse garniture (50) étant interposé entre lesdites rondelles élastiques (56) et lesdites garnitures (46).

5. Robinet à soupape selon la revendication 4, caractérisé en ce que lesdits moyens de solidarisation de ladite plaque (60) comprennent au moins deux tirants (130, 132) disposés parallèlement à ladite tige de commande (70) ayant chacun une première extrémité solidaire d'une bride (24) faisant partie intégrante dudit corps (12) et une partie médiane filetée (136) traversant des trous (138) ménagés dans ladite plaque, et au moins deux écrous (152, 152'), chaque écrou étant au contact de la face (60a) de ladite plaque non en contact avec lesdites rondelles élastiques (56).

6. Robinet à soupape selon l'une quelconque des revendications 1 et 2, caractérisé en ce que lesdits moyens pour former ladite troisième portée d'appui annulaire consistent en un épaulement (300) dudit corps à l'intérieur de ladite cavité (18), et en ce que lesdits moyens d'étanchéité comprennent des nervures (320, 322) ménagées dans ladite deuxième portée annulaire (314) dudit siège (302).

7. Robinet à soupape selon la revendication 2, caractérisé en ce qu'il comprend une deuxième cage (414) logée dans une deuxième cavité (406) ménagée dans le corps (400) dudit robinet ladite deuxième cavité (406) communiquant avec ladite cavité (408) par un passage cylindrique (410), en ce que ladite deuxième cage (414) présente un bord libre disposé dans ledit passage cylindrique (410) et formant ladite troisième portée annulaire d'appui, et en ce que lesdits moyens d'étanchéité comprennent un joint d'étanchéité annulaire (430) logé dans ledit passage cylindrique (410) et reposant sur ledit bord libre.

8. Robinet à soupape selon la revendication 7, caractérisé en ce que ladite deuxième cage (414) comprend un fond (418) opposé audit bord libre, et en ce que ledit fond (418) de la deuxième cage (414) repose sur une paroi (412) de ladite deuxième cavité (406) par l'intermédiaire d'un système élastique (416).

9. Robinet à soupape selon l'une quelconque des revendications 1 et 2, caractérisé en ce que les moyens pour créer ladite troisième portée d'appui (506) sont fixes par rapport audit corps du robinet, ledit robinet comportant de plus des moyens (502) pour réaliser une quatrième portée d'appui (510) fixe par rapport audit corps de robinet pour que ledit siège (28) soit en butée sur ladite quatrième portée d'appui (510) sous l'effet des moyens de compression (532, 534), de telle manière que la compression des moyens d'étanchéité (26') entre lesdites deuxième et troisième (506) portées d'appui soit limitée par la coopération dudit siège (28) avec ladite quatrième portée d'appui.

**Claims**

1. Globe valve comprising a control rod (70) which is movable in translation along a valve axis, handling means for controlling movements of said rod in translation, a valve disk (74) fixed to one end of said rod, a body constituted by a single part having inlet and outlet passages therethrough for passing the liquid, said passages giving access to a cavity which is extended via a cylindrical orifice provided within said body and disposed along said valve axis in order to receive said rod, a cage (36) lodged inside said cavity and within which said valve disk is capable of being moved by means of said rod, said cage being formed by a base (42) having an orifice (44) therethrough to pass said rod and a side wall (38) having orifices (40) therethrough for passing the liquid, said valve disk being capable of sliding therein, said side wall including a free edge (48) at the opposite end from said base, a seat for cooperating with said valve disk in a closure position, said seat being formed by an annular member distinct from said body, said seat (28, 302, 432) having a first face defining a sealing bearing surface (34, 316, 436) for cooperating with said valve disk (74) and a first annular thrust bearing surface (32, 318, 438) on which said free edge of the cage rests and a second face defining a second annular thrust bearing surface (32, 314, 438), means for defining a third annular thrust bearing surface symmetrically around said valve axis and disposed in said cavity between the opening of said passages and at least substantially fixed relative to said body for receiving said second thrust bearing surface (32, 314, 438) of said seat, sealing means (26, 320, 322, 324, 430) being interposed therebetween, packing members (46) surrounding a portion of said rod, and compression means (56, 60), characterized in that said packing members (46) are disposed in said cylindrical orifice (22) and rest on the outer face of the base (42) of the cage (36), and in that said compression means (56, 60) act on a stack having the same axis as valve body and comprising said packing members (46), said cage (36) said seat (28, 302, 434) and said sealing means (26, 320, 322, 324, 430) whereby said packing members and said sealing means are subjected to said compression in order to provide sealing respectively between said rod (70) and the wall of said cylindrical orifice (22) of the body, and said seat and said body.

2. Globe valve according to claim 1, characterized in that the size of said cage (36), said seat (28, 302, 434), and said sealing means (26, 320, 322, 324, 430) is less, in planes perpendicular to the axis of said valve, than the diameter of said orifice (22) extending said cavity (18) provided within said body.

3. Globe valve according to claim 2, characterized in that said means for forming said third annular thrust bearing surface consist in a shoulder (20) of said body inside said cavity (18) and in that said sealing means comprise a gasket (26) interposed between said second (32) and third (20) annular thrust bearing surfaces.

4. Globe valve according to claim 3, characterized in that said compression means comprise a plate (60) having an orifice for passing said rod (70), means for fixing said plate to said body, a stack of resilient washers (56) surrounding said rod, and a packing ram (50) surrounding said rod, said resilient washers (56) being interposed between said plate (60) and said packing ram (50), said packing ram (50) being interposed between said resilient washers (56) and said packing (46).

5. Globe valve according to claim 4, characterized in that said means for fixing said plate (60) comprise at least two tiebars (130, 132) disposed parallel to said control rod (70) and each having a first end fixed to a flange (24) which is an integral part of said valve body (12) and a threaded middle portion (136) passing through holes (138) provided in said plate, and at least two nuts (152, 152'), each nut being in contact with that face (60a) of said plate which is not in contact with said resilient washers (56).

6. Globe valve according anyone of claims 1 and 2, characterized in that said means for forming said third annular thrust bearing surface consist in a shoulder (300) of said body inside said cavity (18) and in that said sealing means comprise ribs (320, 322) provided in said second annular bearing surface (314) of said seat (302).

7. Globe valve according to claim 2, characterized in that it comprises a second cage (414) lodged in a second cavity (406) provided in said body (400) of said valve, said second cavity (406) communicating with said cavity (408) via a cylindrical passage (410), in that said second cage (414) has a free edge disposed in said cylindrical passage (410) and forming said third annular thrust bearing surface, and in that said sealing means comprise an annular gasket (430) lodged in said cylindrical passage (410) and resting on said free edge.

8. Globe valve according to claim 7, characterized in that said second cage (414) comprises a base (418) at the opposite end to said free edge, and in that said base (418) of the second cage (414) rests against a wall (412) of said second cavity (406) via a resilient system (416).

9. Globe valve according anyone of claims 1 and 2, characterized in that the means for creating said third thrust bearing surface (506) are fixed relative to said valve body, said valve further comprising means (502) for providing a fourth thrust bearing surface (510) which is fixed relative to said valve body so that said seat (28) abuts against said fourth thrust bearing surface (510) under the effect of compression means (532, 534) whereby compression of sealing means (26') between said second and third thrust bearing surfaces (506) is limited by the cooperation between said seat (28) and said fourth thrust bearing surface.

**Patentansprüche**

1. Ventilhahn, mit: einer Steuerstange (70), welche längs der Achse des Hahnes translationsbeweglich ist, Bedienungsmitteln, um die Translationsbewegung dieser Stange zu steuern, einem mit einem Ende dieser Stange fest verbundenen Schließkörper (74), einem aus einem einzigen Teil gebildeten Körper, der mit Durchgängen für den Einlaß und den Auslaß der Flüssigkeit versehen ist, welche in einen durch eine zylindrische Öffnung verlängerten Hohlraum ausmünden, die in dem Körper ausgebildet und längs der Achse dieses Hahns für den Durchgang der Stange angeordnet ist, einem in diesem Hohlraum gelagerten Käfig (36), in welchem der Schließkörper unter der Wirkung der Stange verschiebbar ist, wobei der Käfig durch einen Boden (42), der mit einer Öffnung (44) für den Durchgang der Stange versehen ist, sowie durch eine Seitenwand (38) gebildet ist, welche mit Öffnungen (40) für den Durchgang der Flüssigkeit versehen ist und in welcher der Schließkörper gleiten kann, wobei die Seitenwand einen freien, von dem Boden abgewandten Rand (48) umfaßt; mit einem Sitz, um mit dem Schließkörper in geschlossenem Zustand zusammenzuwirken, wobei der Sitz durch ein ringförmiges, von dem Körper getrenntes Teil gebildet ist, wobei der Sitz (28, 302, 432) eine erste Abdicht-Umfangsfläche (34, 316, 436) bestimmt, um mit dem Schließkörper (74) zusammenzuwirken, sowie eine erste ringförmige Abstütz- Umfangsfläche (32, 318, 438) aufweist, auf welcher der freie Rand des Käfigs sich abstützt, und wobei eine zweite Fläche eine zweite ringförmige Abstütz-Umfangsfläche (32, 314, 438) bildet ; Mitteln zur Bildung einer dritten ringförmigen Umfangsfläche (20, 300, 424), die zu dieser Achse rotationssymmetrisch ist und in dem Hohlraum zwischen den Ausmündungen der Durchgänge und wenigstens im wesentlichen wenigstens feststehend in Bezug auf den Körper sind, um die zweite ringförmige Abstütz-Umfangsfläche (32, 314, 438) des Sitzes über Abdichtungsmittel (26, 320, 322, 324, 430) aufzunehmen, wobei Dichtelemente (46) einen Abschnitt der Stange umgeben ; und mit Kompressionsmitteln (56, 60) ; dadurch gekennzeichnet, daß die Dichtelemente (46) in dieser zylindrischen Öffnung (22) angeordnet sind und auf der Außenfläche des Bodens (42) des Käfigs (36) ruhen und daß die Kompressionsmittel (56, 60) auf einen Stapel einwirken, der dieselbe Achse wie der Hahnkörper aufweist und die Dichtelemente (46), den Käfig (36), den Sitz (28, 302, 434) und die Abdichtungsmittel (26, 320, 322, 324, 430) umfaßt, wodurch die Dichtungen und die Abdichtungsmittel der Kompression unterliegen, um eine Abdichtung zwischen einerseits der Stange (70) und der Wand der zylindrischen Öffnung (22) des Körpers und andererseits dem Sitz und dem Körper herzustellen.

2. Ventilhahn nach Anspruch 1, dadurch gekennzeichnet, daß der Käfig (36), der Sitz (28, 302, 434) und die Abdichtungsmittel (26, 320, 322, 324, 430) in zu dem Hahn senkrecht stehenden Schnittebenen, Abmessungen aufweisen, die kleiner sind als der Durchmesser der den Hohlraum (18) verlängernden Öffnung (22), der in dem Hahnkörper eingerichtet ist.

3. Ventilhahn nach Anspruch 2, dadurch gekennzeichnet, daß die Mittel zur Bildung der dritten ringförmigen Abstütz-Umfangsfläche aus einer Schulter (20) des Körpers innerhalb dieses Hohlraums (18) bestehen und daß die Abdichtungsmittel eine Dichtung (26) umfassen, welche zwischen der zweiten ringförmigen Abstütz-Umfangsfläche und der dritten ringförmigen Abstütz-Umfangsfläche eingefügt ist.

4. Ventilhahn nach Anspruch 3, dadurch gekennzeichnet, daß die Kompressionsmittel umfassen : eine Platte (60), welche mit einer Öffnung für den Durchgang der Stange (70) versehen ist ; Mittel zum festen Verbinden der Platte mit dem Körper ; einen Stapel elastischer Scheiben (56), welche die Stange umgeben ; sowie einen Druckteil für die Dichtelemente (50), welcher die Stange umgibt, wobei die elastischen Scheiben (56) zwischen der Platte (60) und dem Druckteil (50) eingefügt sind und der Druckteil (50) zwischen den elastischen Scheiben (56) und den Dichtelementen (46) eingefügt ist.

5. Ventilhahn nach Anspruch 4, dadurch gekennzeichnet, daß die Mittel zum festen Verbinden der Platte (60) wenigstens zwei Zustangen (130, 132) umfassen, welche zu der Steuerstange (70) parallel angeordnet sind und wovon jede ein erstes, mit einem Flansch (24) fest verbundenes Ende, das ein Bestandteil des Körpers (12) ist, sowie einen mittleren Gewindeteil (136) aufweist, der in der Platte angebrachte Löcher (138) durchquert, sowie wenigstens zwei Schraubmuttern (152, 152′) umfaßt, wobei jede Schraubmutter mit der Fläche (60a) der Platte in Berührung kommt, welche mit den elastischen Scheiben (56) nicht in Berührung kommt.

6. Ventilhahn nach Anspruch 1 oder 2, dadurch gekennzeichnet, daß die Mittel zur Bildung der dritten ringförmigen Abstütz-Umfangsfläche aus einer Schulter (300) des Körpers innerhalb dieses Hohlraums (18) bestehen und daß die Abdichtungsmittel Rippen (320, 322) umfassen, welche in der zweiten ringförmigen Abstütz-Umfangsfläche (314) des Sitzes (302) angebracht sind.

7. Ventilhahn nach Anspruch 2, dadurch gekennzeichnet, daß er einen zweiten Käfig (414) umfaßt, der in einem zweiten Hohlraum (406) aufgenommen ist, welcher in dem Körper (400) des Hahns angebracht ist, wobei der zweite Hohlraum (406) über einen zylindrischen Durchgang (410) mit dem Hohlraum (408) in Verbindung steht, daß der zweite Käfig (414) einen freien Rand aufweist, der in dem zylindrischen Durchgang (410) angeordnet ist und die dritte ringförmige Abstütz-Umfangsfläche bildet, und daß die Abdichtungsmittel eine ringförmige Abdichtung (430) umfassen, welche in dem zylindrischen Durchgang (410) aufgenommen ist und sich auf dem freien Rand abstützt.

8. Ventilhahn nach Anspruch 7, dadurch gekennzeichnet, daß der zweite Käfig (414) einen von dem freien Rand abgewandten Boden (418) umfaßt und daß der Boden (418) des zweiten Käfigs (414) sich auf einer Wand (412) des zweiten Hohlraumes (406) über ein elastisches System abstüzt.

9. Ventilhahn nach Anspruch 1 oder 2, dadurch gekennzeichnet, daß die Mittel zur Bildung der dritten Abstütz-Umfangsfläche (506) in Bezug auf den Körper des Hahnes feststehend sind, wobei dieser Hahn ferner Mittel (502) zur Bildung einer vierten Abstütz-Umfangsfläche (510) umfaßt, welche in Bezug auf den Körper des Hahnes feststehend ist, damit der Sitz (28) gegen die vierte Abstütz-Umfangsfläche (510) unter der Wirkung der Kompressionsmittel (532, 534) anschlägt, so daß die Kompression der Abdichtungsmittel (26′) zwischen der zweiten Abstütz-Umfangsfläche und der dritten Abstütz-Umfangsfläche (506) durch das Zusammenwirken zwischen dem Sitz (28) und der vierten Abstütz-Umfangsfläche begrenzt wird.

FIG.1



EP 0 177 397 B1

FIG. 2

## FIG. 3

# FIG. 4

FIG. 5